(19) Europäisches Patentamt / European Patent Office / Office européen des brevets

(11) **EP 4 541 861 A1**

(12) **EUROPEAN PATENT APPLICATION**
published in accordance with Art. 153(4) EPC

(43) Date of publication:
**23.04.2025 Bulletin 2025/17**

(21) Application number: **23871307.7**

(22) Date of filing: **06.06.2023**

(51) International Patent Classification (IPC):
***C08L 101/08** (2006.01)* ***C08B 15/06** (2006.01)*
***C08L 1/08** (2006.01)* ***D06M 13/432** (2006.01)*
***D06M 101/06** (2006.01)*

(52) Cooperative Patent Classification (CPC):
**C08B 15/06; C08J 3/20; C08L 1/08; C08L 101/00; C08L 101/08; D06M 13/432**

(86) International application number:
**PCT/JP2023/020998**

(87) International publication number:
**WO 2024/070062 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 JP 2022158188**

(71) Applicant: **Daio Paper Corporation**
**Ehime 799-0492 (JP)**

(72) Inventors:
- **AOKI, Ryunosuke**
  **Shikokuchuo-shi, Ehime 799-0492 (JP)**
- **MATSUSUE, Ikko**
  **Shikokuchuo-shi, Ehime 799-0492 (JP)**
- **IMAI, Takaaki**
  **Shikokuchuo-shi, Ehime 799-0492 (JP)**

(74) Representative: **Meissner Bolte Partnerschaft mbB**
**Patentanwälte Rechtsanwälte**
**Postfach 86 06 24**
**81633 München (DE)**

# (54) FIBROUS CELLULOSE COMPOSITE RESIN, FIBROUS CELLULOSE-CONTAINING MATERIAL, AND PRODUCTION METHOD OF FIBROUS CELLULOSE COMPOSITE RESIN

(57) Fibrous cellulose composite resin of high strength and a method for producing the same are provided. The fibrous cellulose composite resin contains fibrous cellulose and resin, wherein the fibrous cellulose is carbamated microfiber cellulose having hydroxy groups partially or fully substituted with carbamate groups, and having Fines A of 25% or higher and a percentage of fibrillation of 1.0% or lower. The method for producing the fibrous cellulose composite resin includes subjecting raw material pulp to papermaking to obtain a strip-shaped pulp sheet, coating the pulp sheet with at least either of urea and a derivative thereof, followed by heating, to prepare a carbamated pulp sheet, defibrating the carbamated pulp sheet into carbamated microfiber cellulose having Fines A of 25% or higher and a percentage of fibrillation of 1.0% or lower, and kneading the carbamated microfiber cellulose and resin.

[FIG.1]

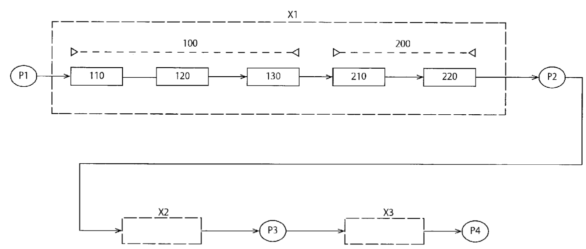


EP 4 541 861 A1

## Description

FIELD OF THE INVENTION

The present invention relates to fibrous cellulose composite resin, fibrous cellulose-containing material, and a method for producing fibrous cellulose composite resin.

BACKGROUND ART

PP (polypropylene), PE (polyethylene), ABS (acrylonitrile-butadiene-styrene copolymerized synthetic resin), or other various resins may contain fine fibers, such as microfiber cellulose obtained by defibrating pulp, as a reinforcing material (filler) for the purpose of enhancing strength of the resins. Such fine fibers are, however, prone to aggregation in the course of drying and, once aggregated, may not be loosened with shear force applied during kneading with resin and may remain as aggregates. The fine fibers with remaining aggregates may not function as a reinforcing material, and may rather cause deterioration of the strength of the resin.

On the other hand, fibers with a reduced degree of pulp defibration, when used as a reinforcing material, may have an improved dispersibility, but may not form three-dimensional networks within the resin, resulting in insufficient enhancement of the resin strength.

In regard to the dispersibility of fine fibers, there has been proposed to substitute hydroxy groups of the fine fibers with carbamate groups (see, for example Patent Publication 1), paying attention to the fact that the fine fibers are hydrophilic, whereas the resins are hydrophobic. This proposal is very favorable for improving dispersibility in resin of fine fibers which are not aggregated, but is not very effective for improving dispersibility of fine fibers which have been aggregated. Therefore, development of a method is eagerly desired for preparing fibrous cellulose composite resin of high strength by improving dispersibility of fine fibers in resin through reduction of aggregation of the fine fibers as much as possible.

PRIOR ART PUBLICATION

PATENT PUBLICATION

Patent Publication 1: JP 2019-001876 A

SUMMARY OF THE INVENTION

PROBLEMS TO BE SOLVED BY THE INVENTION

It is an object of the present invention to provide fibrous cellulose composite resin of high strength, fibrous cellulose-containing material, and a method for producing fibrous cellulose composite resin of high strength.

MEANS FOR SOLVING THE PROBLEMS

The present inventors thought that the shape of fine fibers after defibration had a great impact on aggregability, as fine fibers like microfiber cellulose are prone to aggregation in the course of drying, as discussed above, and made intensive studies on the premise of this thought. As a result, the inventors have found out that fine fibers of the same fiber size but with more branches, more specifically, fine fibers of the same Fines A but with a higher percentage of fibrillation, firmly aggregate at the branches in the course of drying. Based on this finding, the present inventors have thought of the following means for solving the above-discussed problems.

That is, the present invention is fibrous cellulose composite resin containing fibrous cellulose and resin, wherein the fibrous cellulose is carbamated microfiber cellulose having hydroxy groups partially or fully substituted with carbamate groups, and having Fines A of 25% or higher and a percentage of fibrillation of 1.0% or lower.

The present invention is also a method for producing fibrous cellulose composite resin including:

subjecting raw material pulp to papermaking to obtain a strip-shaped pulp sheet,
coating the pulp sheet with at least either of urea and a derivative thereof, followed by heating, to prepare a carbamated pulp sheet,
defibrating the carbamated pulp sheet into carbamated microfiber cellulose having Fines A of 25% or higher and a percentage of fibrillation of 1.0% or lower, and
kneading the carbamated microfiber cellulose and resin to obtain fibrous cellulose composite resin.

The present invention is further a fibrous cellulose-containing material containing a carbamated microfiber cellulose having hydroxy groups partially or fully substituted with carbamate groups, and having Fines A of 25% or higher and a percentage of fibrillation of 1.0% or lower, and maleic anhydride-modified resin.

EFFECT OF THE INVENTION

According to the present invention, there are provided fibrous cellulose composite resin of high strength, fibrous cellulose-containing material, and a method for producing fibrous cellulose composite resin of high strength.

BRIEF DESCRIPTION OF THE DRAWINGS

Fig. 1 is an explanatory chart illustrating the steps for obtaining carbamated fine fibers from raw material pulp.

DESCRIPTION OF THE INVENTION

Next, embodiments for carrying out the present invention are discussed. It should be noted that the present embodiments are mere examples of the present invention, and the scope of the present invention is not limited by the scope of the present embodiments.

The fibrous cellulose composite resin according to this embodiment contains fibrous cellulose and resin, wherein the fibrous cellulose is carbamated microfiber cellulose having hydroxy groups partially or fully substituted with carbamate groups, and having Fines A of 25% or higher and a percentage of fibrillation of 1.0% or lower. According to the present embodiment, the carbamated microfiber cellulose may be obtained by carbamating and defibrating raw material pulp. In this regard, it is not limited how the carbamated microfiber cellulose has been brought to have the above-mentioned properties. However, it is preferred to prepare the carbamated microfiber cellulose by subjecting raw material pulp to papermaking to obtain a strip-shaped pulp sheet, coating the pulp sheet with at least either of urea and a derivative thereof, followed by heating, to prepare a carbamated pulp sheet, and defibrating the carbamated pulp sheet. This preparation method is discussed below.

As shown in Fig. 1, the preparation method according to the present embodiment may be divided mainly into step X1 up to obtaining, from raw material pulp P1, a cellulose fiber-containing material P2 which may be used as "a pulp sheet containing at least either of urea and a derivative thereof (sometimes simply referred to as "urea or the like"); step X2 following step X1, up to obtaining carbamated cellulose fibers P3 by reacting the urea or the like on the cellulose fibers; and step X3 following step X2, up to obtaining carbamated fine fibers P4 by defibrating the carbamated cellulose fibers P3.

Further, step X1 up to obtaining a cellulose fiber-containing material P2 may be subdivided mainly into step 100 of subjecting the raw material pulp P1 to papermaking to obtain a strip-shaped pulp sheet, and step 200 of coating the pulp sheet with the urea or the like. Discussions will be made in order.

<Raw Material Pulp>

As the raw material pulp P1, one or more members may be selected and used from the group consisting of, for example, wood pulp made from hardwood, softwood, or the like; non-wood pulp made from straw, bagasse, cotton, hemp, bast fibers, or the like; and de-inked pulp (DIP) made from recovered used paper, waste paper, or the like.

In this regard, however, the raw material pulp P1 is preferably wood pulp in order to avoid contamination of impurities as much as possible. As the wood pulp, one or more members may be selected and used from the group consisting of, for example, chemical pulp, such as hardwood kraft pulp (LKP), softwood kraft pulp (NKP), or the like; mechanical pulp (TMP); and the like.

The hardwood kraft pulp may be hardwood bleached kraft pulp, hardwood unbleached kraft pulp, or hardwood semi-bleached kraft pulp. Similarly, the softwood kraft pulp may be softwood bleached kraft pulp, softwood unbleached kraft pulp, or softwood semi-bleached kraft pulp.

In this regard, it is preferred to combine NKP (preferably NBKP) and LKP (preferably LBKP). Here, NKP has thicker and longer cellulose fibers, which enhances the strength of the cellulose fiber-containing material, but impairs the formation. On the other hand, LKP has thinner and shorter cellulose fibers, which results in lower strength of the pulp sheet resulting from papermaking, but improves the formation. In view of such properties, when NKP and LKP are combined, the proportion of NKP is preferably 1 to 99 mass%, more preferably 5 to 95 mass%, particularly preferably 10 to 90 mass%. At a proportion of NKP below 10 mass%, paper breakage possibly due to insufficient tensile strength or tear resistance may occur during the papermaking step or the coating step. At a proportion of NKP over 90 mass%, i.e., at a proportion of LKP below 10 mass%, for example, properties, such as a resin reinforcing effect, may not be achieved sufficiently.

As the mechanical pulp, one or more members may be selected and used from the group consisting of, for example, stone ground pulp (SGP), pressurized stone ground pulp (PGW), refiner ground pulp (RGP), chemi-ground pulp

(CGP), thermo-ground pulp (TGP), ground pulp (GP), thermomechanical pulp (TMP), chemithermomechanical pulp (CTMP), refiner mechanical pulp (RMP), and bleached thermomechanical pulp (BTMP).

The freeness of the raw material pulp P1 as measured in accordance with JIS P 8121-2 is preferably 200 to 700 cc, more preferably 250 to 650 cc, particularly preferably 300 to 600 cc. With a freeness below 200 cc, dewaterability in the wire section to be discussed later is impaired, and the papermaking speed may not be increased. With a freeness over 700 cc, the formation is impaired and paper breakage may occur in the subsequent coating step.

It is preferred to add a sizing agent internally and/or externally to the raw material pulp P1, as required, to adjust the Stoeckigt sizing degree (JIS P 8122) and/or the Cobb sizing degree (JIS P 8140). Here, the Stoeckigt sizing degree is determined by a test to measure the time required for a liquid chemical to permeate a pulp sheet and develop color, and a lower value represents higher permeability. The Cobb sizing degree is determined by a test to measure the water absorption (mass) of a pulp sheet when one side thereof is brought into contact with water for a predetermined period of time, and a higher value represents a higher water absorption. Thus, the Stoeckigt sizing degree, which is an index of permeability, and the Cobb sizing degree, which is an index of water absorption, widely differ between with and without a sizing agent. In this regard, with a larger amount of a sizing agent, the amount of the urea or the like to be added (amount to be permeated) in the coating step to be discussed later is insufficient, which may lead to insufficient reaction. With a smaller amount of a sizing agent, paper breakage may occur due to a lower wet paper strength. Thus, it is necessary to adjust the amount of the sizing agent to be added, which amount may be decided based on the Stoeckigt sizing degree or the Cobb sizing degree of the pulp sheet as measured before coated with the urea or the like.

Specifically, the Stoeckigt sizing degree as measured in accordance with JIS P 8122 is preferably 0.1 to 100 seconds, more preferably 0.2 to 80 seconds, particularly preferably 0.5 to 50 seconds. The Cobb sizing degree as measured in accordance with JIS P 8140 (10 seconds) is preferably 10 to 600 $g/m^2$, more preferably 20 to 580 $g/m^2$, particularly preferably 30 to 550 $g/m^2$.

The ash content of the raw material pulp P1 as measured in accordance with JIS P 8251 is preferably 0 to 20 mass%, more preferably 0 to 15 mass%, particularly preferably 0 to 10 mass%. With an ash content over 20 mass%, the strength of the pulp sheet in a wet condition is low, which may lead to paper breakage particularly in the coating step.

It should be noted that the preparation method according to the present invention is not a production method of paper, but merely utilizes the state or form of the pulp sheet for effectively reacting the urea or the like. Thus, knowledge about addition of ash in papermaking technology is not directly applicable and, for example, the content of this ash may affect the progress of defibration, if performed in a subsequent step.

<Papermaking Step>

In the method according to the present embodiment, the raw material pulp P1 is subjected to papermaking to obtain a strip-shaped pulp sheet in papermaking step 100. Here, the term "strip-shaped" means that the pulp sheet is in the form of an elongate continuous sheet with a predetermined width (e.g., 300 to 10000 mm), and has a shape the same as or similar to that of wet paper or paper web in the paper manufacturing process.

The papermaking equipment used in the papermaking step 100 may be, for example, a Fourdrinier former having a wire section 110, a press section 120, and the like, a Fourdrinier former combined with an on-top former, or a gap former.

Use of a gap former is advantageous, in which a jet of stock injected from a head box is immediately held between twin wires, since little difference results between the front and back surfaces of the resulting pulp sheet, so that the urea or the like may permeate the pulp sheet evenly in the thickness direction (Z-axis direction).

Though this gap former has the advantage of resulting little difference between the front and back surfaces of the pulp sheet, the pulp sheet is poor in flatness as it contacts the wire surfaces on both sides, and is also poor in formation as the formation is fixed instantaneously upon injection of the stock onto the wires. Production of paper per se is not an object of the present embodiment, so that the flatness or the formation may not matter, but in view of the subsequent coating manner or permeability of liquid chemical, it is preferred to employ on-top linear fords for good flatness and formation. In particular, with a shaking mechanism (mechanism for shaking the wires transversely) attached to the wires, the formation may still be improved advantageously.

The pulp sheet (paper layer) from the wire section 110 flows to (is transferred to) the press section 120, where it is subjected to dehydration.

A press used in the press section 120 may be of, for example, a straight-through type, an inverted type, a reverse type, or a combination thereof. The straight-through type press without open draw is preferred as the pulp sheet is easily supported, and operation troubles, such as paper breakage, seldom occur.

The pulp sheet (wet paper) from the press section 120 may be transferred to pre-dryer section 130 of, for example, a single deck type or a double deck type, for drying. The pre-dryer section 130 is preferably a single deck dryer of a no-open-draw type, in which highly efficient drying may be performed without paper breakage or bulk reduction.

The drying temperature in the pre-dryer section 130 is preferably 80 to 140 °C, more preferably 85 to 135 °C, particularly preferably 90 to 130 °C. At a drying temperature over 140 °C, localized overdrying may occur, wherein

permeation of the urea or the like in the coating step 200 may be impaired. At a drying temperature below 80 °C, localized underdrying may occur, wherein paper breakage may occur.

The pulp sheet from the pre-dryer section 130 has a moisture percentage of preferably 0.1 to 10%, more preferably 1 to 9%, particularly preferably 2 to 8%. At a moisture percentage below 0.1%, the pulp sheet is overdried, and permeation of the urea or the like in the coating step 200 may be impaired. At a moisture percentage over 10%, the pulp sheet is underdried, and paper breakage may occur in the coating step 200.

As used herein, the moisture percentage refers to a value measured with a BM (basis weight/moisture) meter using infrared.

The strip-shaped pulp sheet obtained from the papermaking step 100 has a basis weight of preferably 60 to 800 $g/m^2$, more preferably 80 to 750 $g/m^2$, particularly preferably 100 to 700 $g/m^2$, as measured in accordance with JIS P 8124. With a basis weight below 60 $g/m^2$, paper breakage due to insufficient strength may occur particularly in the coating step 200. With a basis weight over 800 $g/m^2$, the urea or the like may not permeate sufficiently in the coating step 200. Note that the basis weight discussed above is for a single ply. With a plurality of plies having two or more plies, the liquid chemicals may stay at the interface between the plies.

The urea or the like applied in the coating step 200 may contain any papermaking chemicals. The kinds of the papermaking chemicals are not particularly limited, and the concentration of the papermaking chemicals may suitably be adjusted as required. However, it is naturally required not to obstruct the purpose of applying the urea or the like, and adjustment may be required in some cases. For example, according to the present embodiment in which the urea or the like is used in the coating step 200, papermaking is performed so that papermaking chemicals, such as those having hydroxyl groups, for example, various starches or CMC (carboxymethylcellulose), those having a group, such as a silanol group, in which -OH is bound to a certain element, for example, colloidal silica or aluminum sulfate, rosin sizing agents, ASA (alkenyl succinic anhydride), AKD (alkyl ketene dimers), various starches, CMC, or the like, are at a concentration of preferably 0 to 10%, more preferably 0.1 to 9%, particularly preferably 0.2 to 8% in the papermaking step 100. As above-mentioned papermaking chemicals undergo modification with the urea or the like, use of the urea or the like in the reaction step X2 will be hindered, with a large amount of such papermaking chemicals contained in the urea or the like. It does not matter whether the above-mentioned papermaking chemicals are added internally or externally.

Dyes may be contained in the pulp sheet, depending on the intended use of the resulting product. For example, when the resulting product is to be used as a reinforcing material for resin and thus coloring with the fine fibers is not desired, the papermaking is performed so that the content of the dyes is preferably 0 to 10%, more preferably 0.1 to 5%, particularly preferably 0.2 to 3%.

Similarly, the brightness of the pulp sheet as measured in accordance with JIS P 8148 is preferably 80% or higher, more preferably 82% or higher, particularly preferably 85% or higher. Note that, when the raw material pulp P1 is LBKP and NBKP as in the embodiment discussed above, the brightness usually becomes 80% or higher, and thus no adjustment is required.

The tensile strength of the pulp sheet as measured in accordance with JIS P 8113 is preferably 10 MPa or higher, more preferably 15 MPa or higher, particularly preferably 20 MPa or higher. With a tensile strength below 10 MPa (1 kN/m, 100 μm thick), paper breakage may occur in the coating step 200. Though a higher basis weight may result in a higher tensile strength, increase in the basis weight, as discussed above, may cause difficulties in permeation of the urea or the like in the coating step 200. Accordingly, the balance between the tensile strength and the basis weight is important, and the specific tensile strength (tensile strength / basis weight) is preferably 1 to 10000 Nm/g, more preferably 5 to 5000 Nm/g, particularly preferably 10 to 1000 Nm/g.

The wet paper strength of the pulp sheet as measured in accordance with JIS P 8135 is preferably 0.1 kN/m or higher, more preferably 0.2 kN/m or higher, particularly preferably 0.5 kN/m or higher. With a wet paper strength below 0.1 kN/m, paper breakage may occur in the coating step 200. Though a higher basis weight may result in a higher wet paper strength, increase in the basis weight, as discussed above, may cause difficulties in permeation of the urea or the like in the coating step 200. Accordingly, the balance between the wet paper strength and the basis weight is important, and the specific wet paper strength (wet paper strength / basis weight) is preferably 0.1 to 5000 Nm/g, more preferably 0.5 to 1000 Nm/g, particularly preferably 1 to 500 Nm/g.

<Coating Step>

The pulp sheet dried in the pre-dryer section 130 is coated with the urea or the like in coater section 210 between the pre-dryer section 130 and the after-dryer section 220. As used herein, the term "coating" merely means the action of "application", and does not intend to limit the state of the applied urea or the like. Accordingly, for example, the term "coating" encompasses not only an embodiment wherein the urea or the like remain on the pulp sheet surface to form a coating layer, but also an embodiment wherein the urea or the like fully permeate the pulp sheet to form no coating layer on the pulp sheet surface, i.e., a simple, impregnated state.

In the coater section 210, coating with the urea or the like may be performed through a coating method, such as

beveled blade coating, size press coating, bent blade coating, rod coating, impregnation coating, spray coating, or comma coating. Preferably, the coating in the coater section 210 is performed through bent blade coating. Bent blade coating is a kind of blade coating and, while in another kind of blade coating, beveled blade coating, the urea or the like sprayed with a fountain is scraped off, the urea or the like is pressed into the pulp sheet in bent blade coating. Thus, bent blade coating is suitable for the present embodiment intensely requiring permeation of the urea or the like into the pulp sheet.

On the other hand, immersion coating and comma coating have the following features.

As used herein, the term "impregnation coating" means a method of coating by causing a pulp sheet to travel in a vessel containing the urea or the like. The term "comma coating" means a method of coating by causing a pulp sheet to travel through a clearance between two rolls, which form a liquid pool with a blade, with the clearance adjusting the coating amount.

The concentration of the urea or the like may suitably be adjusted as necessary. According to the present embodiment for carbamation, the concentration of the urea or the like is preferably 20 to 50 mass%, more preferably 25 to 45 mass%, particularly preferably 30 to 40 mass%. At a concentration of the urea or the like below 20 mass%, the rate of carbamation is insufficient and drying may be difficult. At a concentration of the urea or the like over 50 mass%, melting of the urea or the like in preparing aqueous urea solution may cause endothermic reaction to lower the temperature of the solution, resulting in precipitation of urea or the like.

The viscosity of the aqueous urea solution (40% concentration) as measured in accordance with JIS Z8803 (2011) is preferably 2000 cps or lower, more preferably 1700 cps or lower, particular preferably 1500 cps or lower. At a viscosity over 2000 cps, the aqueous urea solution is hard to permeate the pulp sheet.

According to the preparation method of the present embodiment, the coating step 200 may be performed off-line or on-line. However, when the production speed is 300 m/min or higher, it is preferred that the papermaking step 100 and the coating step 200 are incorporated in the method (on-line) in this order as continuous on-machine steps. With the coating step 200 being on-line, production efficiency is improved, and uniform coating may be achieved without being affected by the storage conditions of the pulp sheet or the like.

According to the preparation method of the present embodiment, the urea or the like may be applied to only either side or both sides of the pulp sheet. In view of uniformity of the reaction in the subsequent step, the urea or the like is preferably applied to both sides of the pulp sheet.

Off-line application of the urea or the like on both sides of the pulp sheet may be advantageous in that each side of the pulp sheet may be coated with a different amount of the urea or the like depending on the characteristics of the pulp sheet.

The ratio by mass of the urea or the like coating the cellulose fibers (the urea or the like / cellulose fibers) is preferably 10 to 400 kg/pt (pulp ton), more preferably 20 to 300 kg/pt, particularly preferably 45 to 200 kg/pt. At a ratio by mass below 45 kg/pt, carbamation may not proceed sufficiently. At a ratio by mass over 200 kg/pt, coating is excessive and excess urea or the like may adhere to the machines. While the amount of the coating is usually defined in terms of mass per 1 $m^2$, according to the present embodiment, the urea or the like is a chemical (reaction agent) for reacting on the cellulose fibers, so that the amount of the coating is defined preferably in terms of the amount of urea per unit mass of the cellulose fibers.

The pulp sheet from the coater section 210 is transferred to the after-dryer section 220 for drying.

For drying in the after-dryer section 220, dryers, such as hot-air dryers, gas-heating dryers, or infrared dryers may be used. However, with infrared dryers, the urea or the like may be hardened on the pulp sheet surface to keep it from permeation. Thus, hot-air dryers are preferred. In particular, hot-air dryers, whose temperature control is easy, may be arranged in a plurality of stages and designed for gradual rise in temperature, which may proceed with drying without disturbing the permeation of the urea or the like.

In the after-dryer section 220, the drying temperature is preferably 80 to 140 °C, more preferably 85 to 135 °C, particularly preferably 90 to 130 °C. At a drying temperature below 80 °C, shorter drying time may result in insufficient drying, so that such drying temperature is not suitable for high-speed production. At a drying temperature over 140 °C, the urea or the like may produce byproducts.

The moisture percentage of the pulp sheet from the after-dryer section 220 is preferably 0 to 10%, more preferably 0 to 8%, particularly preferably 0 to 7%. With a moisture percentage of the pulp sheet over 10%, reaction efficiency may be lowered in the reaction step.

In this step in the after-dryer section 220, the moisture percentage mentioned above is a value as measured with a BM (basis weight/moisture) meter using infrared.

The surface temperature of the pulp sheet from the after-dryer section 220 is preferably 30 to 95 °C, more preferably 35 to 90 °C, particularly preferably 40 to 85 °C. With a surface temperature below 40 °C, sufficient drying may not be achieved. With a surface temperature over 95 °C, the reaction agent may produce byproducts.

It should be noted that production of paper per se is not an object of the present embodiment, and merely the form as paper (pulp sheet) is temporarily used. Accordingly, the after-dryer section may be followed by a calender step, or by the reaction step with a calender step omitted.

<Carbamation Step>

The pulp sheet (pulp fiber-containing material) from the after-dryer section 220 may be, for example, taken up once in a winder section (not shown) and stored as a wound raw material roll. It is conceivable, then, to subject the wound raw material roll as it is to a process, such as heating or cooling to cause reaction of the urea or the like on the cellulose fibers. However, according to this embodiment, the pulp sheet is drawn out of the wound raw material roll and processed to proceed with the carbamation.

When the pulp sheet is once taken up as a wound raw material roll, it is preferred to dry the pulp sheet after being drawn out to have a moisture percentage of 10 mass% or lower, more preferably 9 mass% or lower, particularly preferably 8 mass% or lower. This drying is carried out for the purpose of increasing the reaction efficiency.

In fact, when the pulp sheet is once taken up to form a wound raw material roll as discussed above, the production efficiency is lowered. In this regard, it is more preferred for the pulp sheet from the after-dryer section 220 to proceed (to be transferred) continuously to carbamation step X2. In this case, the above-mentioned drying of the pulp sheet prior to the carbamation may be omitted.

In the carbamation step X2, the urea or the like contained in the pulp sheet, i.e., the cellulose fiber-containing material, is reacted with the cellulose fibers. Here, this reaction will now be explained in detail.

First of all, the term "carbamation" means to modify the cellulose fibers to have carbamate groups, that is, to cause the cellulose fibers to have carbamate (esters of carbamic acid) introduced therein.

Carbamate groups are represented by -O-CO-NH-, and may be, for example, $-O-CO-NH_2$, -O-CONHR, or $-O-CO-NR_2$. In other words, carbamate groups are represented by the following structural formula (1):

[Formula 1]

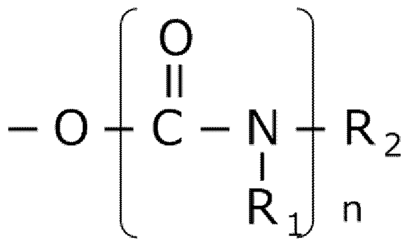

In the formula, n is an integer of 1 or more. R is independently at least any of hydrogen, a saturated straight chain hydrocarbon group, a saturated branched hydrocarbon group, a saturated cyclic hydrocarbon group, an unsaturated straight chain hydrocarbon group, an unsaturated branched hydrocarbon group, an aromatic group, and derivative groups thereof. Further, cross-linked carbamated cellulose in which cross-linked structures via carbamate groups have been formed between the cellulose molecules or fibers, may also be used.

The saturated straight chain hydrocarbon group may be, for example, a straight chain alkyl group having 1 to 10 carbon atoms, such as a methyl group, an ethyl group, or a propyl group.

The saturated branched hydrocarbon group may be, for example, a branched alkyl group having 3 to 10 carbon atoms, such as an isopropyl group, a sec-butyl group, an isobutyl group, or a tert-butyl group.

The saturated cyclic hydrocarbon group may be, for example, a cycloalkyl group, such as a cyclopentyl group, a cyclohexyl group, or a norbornyl group.

The unsaturated straight chain hydrocarbon group may be, for example, a straight chain alkenyl group having 2 to 10 carbon atoms, such as an ethenyl group, a propene-1-yl group, or a propene-3-yl group, or a straight chain alkynyl group having 2 to 10 carbon atoms, such as an ethynyl group, a propyn-1-yl group, or a propyn-3-yl group.

The unsaturated branched hydrocarbon group may be, for example, a branched alkenyl group having 3 to 10 carbon atoms, such as a propene-2-yl group, a butene-2-yl group, or a butene-3-yl group, or a branched alkynyl group having 4 to 10 carbon atoms, such as a butyne-3-yl group.

The aromatic group may be, for example, a phenyl group, a tolyl group, a xylyl group, or a naphthyl group.

The derivative groups may be a saturated straight chain hydrocarbon group, a saturated branched hydrocarbon group, a saturated cyclic hydrocarbon group, an unsaturated straight chain hydrocarbon group, an unsaturated branched hydrocarbon group, or an aromatic group in which one or a plurality of hydrogen atoms thereof are substituted with substituents (for example, a hydroxy group, a carboxy group, or a halogen atom).

In the cellulose fibers having carbamate groups (having carbamate groups introduced therein), part or all of the

highly polar hydroxy groups have been substituted with relatively low polar carbamate groups. Thus, such cellulose fibers have lower hydrophilicity and higher affinity to resins having lower polarity. As a result, fine fibers obtained by defibrating such cellulose fibers have excellent homogeneous dispersibility in resins. Further, a slurry of such fine fibers is low in viscosity and excellent in handleability.

The lower limit of the degree of substitution of the hydroxy groups of the cellulose fibers with carbamate groups is preferably 0.05, more preferably 0.1, particularly preferably 0.2. With a degree of substitution of 0.05 or higher, the effect from the introduction of carbamate may certainly be produced. On the other hand, the upper limit of the degree of substitution is preferably 1, more preferably 0.5, particularly preferably 0.4. In this regard, cellulose fibers with a higher degree of substitution is disadvantageously expensive.

Note that cellulose is a polymer having anhydroglucose as a structural unit, wherein one structural unit includes three hydroxy groups. Accordingly, when all of the hydroxy groups are substituted with carbamate groups, the degree of substitution is 3.

The amount of carbamate groups introduced into the cellulose fibers is preferably 0.5 to 4.5 mmol/g, more preferably 0.6 to 4.0 mmol/g, particularly preferably 0.7 to 3.5 mmol/g. At a degree of substitution below 0.5 mmol/g, sufficient reinforcing effect may not be achieved when made into composite resin. At a degree of substitution over 4.5 mmol/g, excess urine may be required.

With respect to introduction of carbamate (carbamation) into the cellulose fibers, the cellulose fibers may be carbamated followed by making the carbamated fibers finer, or the cellulose fibers may be made finer into fine fibers followed by carbamation thereof. It is preferred to perform the carbamation first, followed by the defibration, as in the present embodiment. This is because dewaterability of the cellulose fibers before the defibration is highly effective, and the defibration of the cellulose fibers may be facilitated by the heating associated with the carbamation.

Hitherto, the process of carbamating the cellulose fibers generally involved, for example, a mixing step, a removing step, and a heating step. In the mixing step, the cellulose fibers and the urea or the like are mixed in a dispersion medium. However, with this mixing step, the production efficiency is remarkably deteriorated. In view of this, according to the present embodiment, the urea or the like is reacted on the cellulose fibers in the form of a strip-shaped pulp sheet. Here, it is conceivable that the pulp sheet is in the form of a wound raw material roll, or in a state drawn out of the wound raw material roll. For better reaction efficiency and reaction uniformity, the pulp sheet is brought into the drawn-out state.

The urea or the derivatives thereof may be, for example, urea, thiourea, biuret, phenylurea, benzylurea, dimethylurea, diethylurea, tetramethylurea, or compounds obtained by substituting the hydrogen atoms of urea with alkyl groups. One or a combination of a plurality of these urea or derivatives thereof may be used, and use of urea is preferred.

In the carbamation step X2 according to the present embodiment, the pulp sheet, i.e., the cellulose fiber-containing material P2 containing the urea or the like, is heat treated. In the carbamation step X2, the hydroxy groups of the cellulose fibers are partially or fully reacted with the urea or the like and substituted with carbamate groups. More specifically, the urea or the like, when heated, is decomposed into isocyanic acid and ammonia as shown by the reaction formula (1) below, and the isocyanic acid, which is highly reactive, reacts with the hydroxyl groups of cellulose to form carbamate groups as shown by the reaction formula (2) below.

$$NH_2\text{-CO-}NH_2 \rightarrow \text{H-N=C=O} + NH_3 \ldots \quad (1)$$

$$\text{Cell-OH} + \text{H-N=C=O} \rightarrow \text{Cell-O-CO-}NH_2 \ldots \quad (2)$$

For reacting the urea or the like with cellulose fibers, the heating temperature in the carbamation step X2 may be preferably 150 to 280 °C, more preferably 160 to 270 °C, particularly preferably 180 to 260 °C. At a heating temperature below 150 °C, sufficient reaction may not be achieved. At a heating temperature over 280 °C, the urea or the like may be thermally decomposed, and coloring may be remarkable.

Further, For reacting the urea or the like with cellulose fibers, the duration of heating in the carbamation step X2 is preferably 1 to 60 seconds, more preferably 1 to 30 seconds, particularly preferably 1 to 20 seconds. With a duration of heating over 60 seconds, coloring may be remarkable and productivity may be poor.

As discussed above, the pulp sheet may be heated in an as-taken-up state, or in a state drawn out of the wound raw material roll. For heating the pulp sheet in an as-taken-up state, apparatus such as of hot-air heating type, high-frequency heating type, or a rotary kiln type may be used. On the other hand, for heating the pulp sheet drawn out of the wound raw material roll, apparatus such as induction heating rolls, oil-heated rolls, hot-air heaters, far-infrared heaters, or microwave heaters may be used.

Here, discussion will now be made as to operation features when the above-mentioned heaters are used.

First, the heating method may generally be divided into two types (batch type and continuous (roll-to-roll) type). The batch-type heating may be carried out with high-frequency heaters and rotary kilns, which are capable of causing reaction of a large amount of samples at a time. In this regard, in a high-frequency heater, when an item to be heated is

placed between the electrodes, polarization occurs inside the item to generate electrical charges, and with the change in frequency rate, vigorous internal friction of molecules are caused, resulting in heating. On the other hand, the rotary kiln is rotary high-temperature firing apparatus, and used for recovering chemicals in a kraft pulping step in the art of papermaking.

On the other hand, the roll-to-roll heating wherein the pulp sheet is heated while passing between a pair of rolls may be carried out with induction heating rolls or oil-heated rolls for continuous heating of a pulp sheet coated with urea, or using hot-air heatibg, far-infrared heating, or microwave heating, for further continuous heating. In this regard, the induction heating rolls perform the heating by causing the rolls per se to generate heat under the action of an electrically generated magnetic field, and are also used in calender equipment in a papermaking process. In oil-heated rolls, heated oil is circulated inside the rolls to heat the roll surfaces. In hot air heating, hot air is injected through nozzles arranged above and under a conveyer onto the top and bottom surfaces, respectively, of a pulp sheet to heat the pulp sheet passing therebetween. In far-infrared heating, infrared rays with a wavelength of 3 μm to 1 mm are emitted to cause interatomic stretching and vending for heating. In microwave heating, heat is generated depending on their frequency (300 MHz to 30 GHz) by causing frictional heat between molecules constituting a pulp sheet, and a microwave oven is a general example thereof.

A reaction facility equipped with induction heating rolls, rather than oil-heated rolls, is preferred for their higher reaction efficiency and energy efficiency. On the other hand, by batch heating of the pulp sheet in the form of a wound raw material roll, in particular using high-frequency wave, a large amount of samples are heated at a time, so that the reaction proceeds unevenly and uniform carbamation reaction may be difficult to achieve.

On the other hand, in continuous heating with apparatus other than the roll-to-roll heaters, including the induction heating rolls or oil-heated rolls, for example, in non-contact heating, such as hot-air heating or far-infrared heating, carbamation may be promoted by increasing the reaction temperature.

In sum, it is particularly preferred to heat a pulp sheet, which has been formed into a strip shape by subjecting the raw material pulp P1 to papermaking and contains the urea or the like, between a pair of rolls while passing therebetween, to cause the reaction. When a width of the pulp sheet is 300 to 10000 mm, either one of the pair of the rolls is more preferably a heating roll. Here, the heating temperature of the heating rolls is preferably 180 to 280 °C, more preferably 200 to 270 °C, particularly preferably 220 to 260 °C.

Furthermore, it is preferred to arrange multiple stages of the rolls (a plurality of pairs of rolls are arranged), and set the heating temperature on the first stage to as low as 80 to 140 °C (more preferably 90 to 120 °C), and that on the second and subsequent stages to 180 to 280 °C (more preferably 200 to 280 °C). In addition, the heating temperatures of the heating rolls may be designed to increase gradually stage by stage within the range of 80 to 280 °C. In this case, instead of keeping the first stage at a lower temperature, it is also preferred to set the linear nip pressure between a pair of the rolls on at least one of the stages to 1 to 100000 N/cm, preferably 10 to 50000 N/cm. The features discussed above advantageously keep the pulp sheet from shrinking.

The mixture from the heat treatment may be washed. This washing may be performed with water or the like. By this washing, residual, unreacted urea or the like may be removed.

Here, whether the mixture has been washed thoroughly or not may be confirmed by determination of the nitrogen concentration or transparency of the filtrate (slurry), and may preferably be evaluated by the "rate of displacement washing" as will be defined below. Note in the following that the "first stage" refers to the first time that the pulp slurry before dehydration (after disintegration) is subjected to a dehydration step. The "second and subsequent stages" refers to repeated, similar dehydration steps after completion of the first stage with the total volume, following addition of dilution water and stirring.

Rate of Displacement Washing D0 (first stage) = A0 / (X0 + Y0) × 100 (%)

X0: amount of water contained in pulp before dehydration = amount of aqueous dispersion of pulp before dehydration - pulp concentration before dehydration × amount of aqueous dispersion of pulp before dehydration

Y0: amount of water contained in pulp after dehydration = amount of aqueous dispersion of pulp after dehydration - pulp concentration after dehydration × amount of aqueous dispersion of pulp after dehydration

A0: amount of filtrate after dehydration = X0 - Y0

Rate of displacement washing Dn (second and subsequent stages) = Dn-1 + An × (1 - Dn-1)/(Xn + Yn) × 100 (%)

Dn-1: rate of displacement washing in previous stage

Xn: amount of water contained in pulp before dehydration = amount of aqueous dispersion of pulp before dehydration - pulp concentration before dehydration × amount of aqueous dispersion of pulp before dehydration
Yn: amount of water contained in pulp after dehydration = amount of aqueous dispersion of pulp after dehydration - pulp concentration after dehydration × amount of aqueous dispersion of pulp after dehydration

$$An: \text{amount of filtrate after dehydration} = Xn - Yn$$

According to the present embodiment, the rate of displacement washing is preferably 80% or higher. Where it is difficult to achieve the rate of washing of 80% or higher through one cycle of dehydration and washing, it is preferred to repeat the dehydration and washing several cycles to effect dilution, dehydration, and washing until the rate of 80% or higher is achieved.

The carbamated cellulose fibers P3 thus obtained have Fines A of preferably 10 to 40%, more preferably 15 to 35%, particularly preferably 20 to 30%. With a higher Fines content of the fibers before defibration, the percentage of fibrillation of the fibers after the defibration step may easily be lowered.

In the papermaking step, it is preferred to slightly defibrate the pulp before papermaking for avoid paper breakage. Such defibration will result in higher Fines A of the fibers after papermaking. Thus, defibration of the fibers before papermaking to lower the freeness of the fibers for higher Fines A of the fibers after papermaking may not only facilitate lowering of the percentage of fibrillation of the ultimately obtained fibers, but also reduce paper breakage in the production steps. In this light, the freeness of the fibers before papermaking is preferably 100 to 800 ml, more preferably 200 to 750 ml, particularly preferably 300 to 700 ml.

The freeness is a value determined in accordance with JIS P8121-2 (2012).

<Defibration>

According to the present embodiment, the carbamated cellulose fibers P3 thus obtained is subjected to grinding or the like process, as required, and defibration (making finer) in defibration step X3. Through this defibration, carbamated fine fibers P4 are obtained.

As used herein, the term "fine fibers" mean cellulose fibers having an average fiber width of 0.01 to 19 μm. The fine fibers includes, for example, microfiber cellulose (microfibrillated cellulose) and cellulose nanofibers.

The carbamated cellulose fibers P3 may be defibrated immediately after grinding or the like, but may be washed, prior to the defibration, by disintegrating in water the reacted cellulose fibers P3 in the form of a sheet or a ground product, and then dehydrating the resulting mass in dehydrating equipment, such as a valveless filter. When a valveless filter is used for the dehydration, the resulting, dehydrated, reacted cellulose fibers P3 in the form of a mat may be showered to perfect the washing. Through the washing, unreacted reaction liquid, byproducts of the reaction liquid, and water-soluble impurities may be removed.

As used herein, the term "microfiber cellulose" means fibers of a larger average fiber diameter compared to cellulose nanofibers, specifically, e.g., 0.1 to 19 μm, preferably 0.2 to 10 μm. With an average fiber diameter of microfiber cellulose below (less than) 0.1 μm, the microfiber cellulose differs nothing from cellulose nanofibers, and sufficient effect to enhance the strength of the composite resin (particularly flexural modulus) may not be achieved when kneaded with resin. Also, a longer time is required for defibration, which in turn requires more energy. Further, dewaterability of a cellulose fiber slurry is impaired. With such an impaired dewaterability, a high amount of energy is required for drying, which in turn may cause thermal deterioration of the microfiber cellulose to impair its strength. On the other hand, with an average fiber diameter over (exceeding) 19 μm, the microfiber cellulose differs nothing from pulp, and sufficient reinforcing effect on resin may not be achieved.

The average fiber diameter of the fine fibers (microfiber cellulose and cellulose nanofibers) may be determined as follows.

First, 100 ml of an aqueous dispersion of fine fibers having a solid concentration of 0.01 to 0.1 mass% is filtered through a TEFLON (registered trademark) membrane filter, and subjected to solvent substitution once with 100 ml of ethanol and three times with 20 ml of t-butanol. Then the resulting mass is lyophilized and coated with osmium to obtain a sample. An electron microscopic SEM image of this sample is observed at a magnification of 3000 to 30000 folds, depending on the width of the constituent fibers. Specifically, two diagonal lines are drawn on the observation image, and three arbitrary straight lines passing the intersection of the diagonals are drawn. Then, the widths of a total of 100 fibers crossing these three straight lines are visually measured. The median diameter of the measured values is taken as the average fiber width.

The carbamated cellulose fibers P3 or a ground product thereof, may be pretreated, bleached, or otherwise treated, by a chemical method prior to the defibration.

Such pretreatment by a chemical method may be, for example, hydrolysis of polysaccharides with acid (acid treatment), hydrolysis of polysaccharides with enzyme (enzyme treatment), swelling of polysaccharides with alkali (alkali

treatment), oxidation of polysaccharides with an oxidizing agent (oxidation treatment), or reduction of polysaccharides with a reducing agent (reduction treatment). Among these, as a pretreatment by a chemical method, enzyme treatment is preferred, and more preferred is one or more treatments selected from acid treatment, alkali treatment, and oxidation treatment, in addition to the enzyme treatment. The enzyme treatment is discussed in detail below.

As an enzyme used in the enzyme treatment, preferably at least one of, more preferably both of cellulase enzymes and hemicellulase enzymes are used. With such enzymes, defibration of the cellulose raw material is more facilitated. It is noted that cellulase enzymes cause degradation of cellulose in the presence of water, whereas hemicellulase enzymes cause degradation of hemicellulose in the presence of water.

The cellulase enzymes may be enzymes produced by, for example, the genus Trichoderma (filamentous fungus), the genus Acremonium (filamentous fungus), the genus Aspergillus (filamentous fungus), the genus Phanerochaete (basidiomycete), the genus Trametes (basidiomycete), the genus Humicola (filamentous fungus), the genus Bacillus (bacteria), the genus Schizophyllum (bacteria), the genus Streptomyces (bacteria), and the genus Pseudomonas (bacteria). These cellulase enzymes are available as reagents or commercial products. Examples of the commercial products may include, for example, Cellulosin T2 (manufactured by HBI ENZYMES INC.), Meicelase (manufactured by MEIJI SEIKA PHARMA CO., LTD.), Novozyme 188 (manufactured by NOVOZYMES), Multifect CX10L (manufactured by GENENCOR), and cellulase enzyme GC220 (manufactured by GENENCOR) .

The cellulase enzymes may also be either EG (endoglucanase) or CBH (cellobiohydrolase). EG and CBH may be used alone or in mixture, or further in mixture with hemicellulase enzymes.

The hemicellulase enzymes may be, for example, xylanase, which degrades xylan; mannase, which degrades mannan; or arabanase, which degrades araban. Pectinase, which degrades pectin, may also be used.

Hemicellulose is a polysaccharide other than pectin, which is present among cellulose microfibrils of plant cell walls. Hemicellulose has numeral varieties and varies depending on the kinds of wood and among cell wall layers. Glucomannan is a major component in the secondary walls of softwood, whereas 4-O-methylglucuronoxylan is a major component in the secondary walls of hardwood. Thus, use of mannase is preferred for obtaining fine fibers from softwood bleached kraft pulp (NBKP), whereas use of xylanase is preferred for obtaining fine fibers from hardwood bleached kraft pulp (LBKP).

The amount of the enzyme to be added to the cellulose fibers may depend on, for example, the kind of enzyme, the kind of wood (either softwood or hardwood) used as a raw material, or the kind of mechanical pulp. The amount of the enzyme to be added may preferably be 0.1 to 3 mass%, more preferably 0.3 to 2.5 mass%, particularly preferably 0.5 to 2 mass%, of the amount of the cellulose fibers. With the amount of the enzyme below 0.1 mass%, sufficient effect due to the addition of the enzyme may not be obtained. With the amount of the enzyme over 3 mass%, cellulose may be saccharified to lower the yield of the fine fibers. A problem also resides in that improvement in effect worth the increased amount to be added may not be observed.

When a cellulase enzyme is used as the enzyme, the enzyme treatment is preferably carried out at a pH in a weakly acidic region (pH = 3.0 to 6.9) in view of the enzymatic reactivity. On the other hand, when a hemicellulase enzyme is used as the enzyme, the enzyme treatment is preferably carried out at a pH in a weakly alkaline region (pH = 7.1 to 10.0).

Irrespective of whether a cellulase enzyme or a hemicellulase enzyme is used as the enzyme, the enzyme treatment is carried out at a temperature of preferably 30 to 70 °C, more preferably 35 to 65 °C, particularly preferably 40 to 60 °C. At a temperature of 30 °C or higher, the enzymatic activity is hard to be lowered, and prolongation of the treatment time may be avoided. At a temperature of 70 °C or lower, enzyme inactivation may be avoided.

The duration of the enzyme treatment may depend on, for example, the type of the enzyme, the temperature in the enzyme treatment, and the pH in the enzyme treatment. Generally, the duration of the enzyme treatment is 0.5 to 24 hours.

After the enzyme treatment, the enzyme is preferably inactivated. Inactivation of enzymes may be effected by, for example, addition of an alkaline aqueous solution (preferably at pH 10 or higher, more preferably at pH 11 or higher) or addition of 80 to 100 °C hot water.

Next, the alkali treatment is discussed.

Alkali treatment prior to the defibration causes partial dissociation of hydroxyl groups in hemicellulose or cellulose in the cellulose fibers, resulting in anionization of the molecules, which weakens intra- and intermolecular hydrogen bonds to promote dispersion of the cellulose fibers during the defibration.

As the alkali used in the alkali treatment, for example, sodium hydroxide, lithium hydroxide, potassium hydroxide, an aqueous ammonia solution, or organic alkali, such as tetramethylammonium hydroxide, tetraethylammonium hydroxide, tetrabutylammonium hydroxide, and benzyltrimethylammonium hydroxide may be used. In view of the manufacturing cost, sodium hydroxide is preferably used.

The enzyme treatment, acid treatment, or oxidation treatment prior to the defibration may result in a lower water retention, a higher degree of crystallinity, and also higher homogeneity of the fine fibers. In this regard, microfiber cellulose at a lower water retention is easily dewatered, so that dewaterability of a cellulose fiber slurry may be improved.

The enzyme treatment, acid treatment, or oxidation treatment of the cellulose fibers causes decomposition of the amorphous region of hemicellulose and cellulose in pulp, which leads to reduction of energy required for the defibration

and to improvement in uniformity and dispersibility of the cellulose fibers. The pretreatment, however, lowers the aspect ratio of microfiber cellulose, and it is thus preferred to avoid excessive pretreatment for the purpose of using the microfiber cellulose as a reinforcing material for resins.

The bleaching may be peroxide bleaching, hypochlorite bleaching, chlorine dioxide bleaching, persulfate bleaching, oxone bleaching, or multistage bleaching of a combination of these, or reduction bleaching with hydrosulfite, sodium borohydride, or the like.

The defibration of the cellulose fibers may be performed by beating the raw material pulp in, for example, beaters, homogenizers, such as high-pressure homogenizers, counter collision-type homogenizers, and high-pressure homogenizing apparatus, millstone friction machines, such as grinders and mills, single-screw kneaders, multi-screw kneaders, kneaders, refiners, and jet mills. It is preferred to use refiners or jet mills.

The average fiber length (average of lengths of single fibers) of the microfiber cellulose is preferably 0.02 to 2.0 mm, more preferably 0.05 to 1.5 mm, particularly preferably 0.1 to 1.0 mm. With an average fiber length below 0.02 mm, the microfiber cellulose may not be able to form three dimensional networks among them, resulting in little improvement in the reinforcing effect on resins. With an average fiber length over 2.0 mm, the length of the microfiber cellulose differs nothing from that of the raw material pulp, so that the reinforcing effect may not be sufficient.

The average fiber length of the microfiber cellulose may arbitrarily be adjusted by, for example, selection, pretreatment, or defibration of the raw material pulp P1.

A proportion of the microfiber cellulose having a fiber length of 0.2 mm or shorter (Fines A) is preferably 25% or higher, more preferably 26 to 80%, particularly preferably 27 to 65%. With Fines A below 25%, sufficient resin reinforcing effect may not be achieved. On the other hand, with Fines A over 80%, the flexural modulus may be insufficient.

The aspect ratio of the microfiber cellulose is preferably 2 to 15000, more preferably 10 to 10000. With an aspect ratio below 2, the microfiber cellulose may not be able to form three dimensional networks among them, resulting in poor reinforcing effect. On the other hand, with an aspect ratio over 15000, the microfiber cellulose tends to be highly entangled, which may lead to insufficient dispersion in the resin.

An aspect ratio is a value obtained by dividing the average fiber length by the average fiber width. A larger aspect ratio causes a larger number of locations to be caught, which enhances the reinforcing effect but, as such, is assumed to result in lower ductility of the resin.

The length of the fibers in determining the average fiber length, Fines A, and the aspect ratio as discussed above, may be measured using a fiber analyzer FS5 manufactured by Valmet K.K.

The percentage of fibrillation of the microfiber cellulose is preferably 1.0 or lower, more preferably 0.45 to 0.95%, particularly preferably 0.60 to 0.90%. With a percentage of fibrillation over 1.0%, the fibers may aggregate upon drying, resulting in insufficient dispersion in resin. In this regard, conventionally the percentage of fibrillation was believed to be preferably over 1.0%, because shorter fiber length and a percentage of fibrillation over 1.0% associated therewith were believed to facilitate formation of three dimensional networks of the fibers in the resin, resulting in higher reinforcing effect. However, it is found out that fibers of a higher percentage of fibrillation tend to aggregate and are hard to be dispersed in resin, which restricts manufacturing conditions (for example, in order to avoid the fiber aggregation, a prolonged period of time is required for drying the fibers), resulting in difficulties in mass production. On the other hand, the microfiber cellulose of a percentage of fibrillation of 1.0% or lower disperses well even in mass production and, further combined with a controlled Fines A, forms three dimensional networks without any problem and provides composite resins of higher strength.

The percentage of fibrillation refers to a ratio of the projected areas of fibrils to the projected areas of the overall fibers, and is represented by napped area / overall fibers including napped area. The value of the percentage of fibrillation may be determined using a fiber analyzer FS5 manufactured by Valmet K.K.

The degree of crystallinity of the microfiber cellulose is preferably 50% or higher, more preferably 55% or higher, particularly preferably 60% or higher. With a degree of crystallinity below 50%, the mixability with pulp or cellulose nanofibers may be improved, whereas the strength of the fibers per se may be lowered to make it difficult to enhance the strength of resins. On the other hand, the degree of crystallinity of the microfiber cellulose is preferably 95% or lower, more preferably 90% or lower, particularly preferably 85% or lower. With a degree of crystallinity over 950, the ratio of firm hydrogen bonding within the molecules is high, which makes the fibers themselves rigid and impairs dispersibility.

The degree of crystallinity of the microfiber cellulose may arbitrarily be adjusted by, for example, selection, pretreatment, or making finer of the raw material pulp P1.

The degree of crystallinity is a value determined in accordance with JIS K 0131 (1996).

The viscosity of the microfiber cellulose is preferably 2 cps or higher, more preferably 4 cps or higher. With a pulp viscosity of the microfiber cellulose below 2 cps, control of aggregation of the microfiber cellulose may be difficult.

The viscosity of the microfiber cellulose is a value determined in accordance with TAPPI T 230.

The freeness of the microfiber cellulose is preferably 500 ml or less, more preferably 300 ml or less, particularly preferably 100 ml or less. With a freeness of the microfiber cellulose over 500 ml, the average fiber diameter of the microfiber cellulose may exceed 10 μm, and sufficient effect to enhance resin strength may not be obtained.

The freeness is a value determined in accordance with JIS P8121-2 (2012).

The zeta potential of the microfiber cellulose is preferably -150 to 20 mV, more preferably -100 to 0 mV, particularly preferably -80 to -10 mV. With a zeta potential below -150 mV, compatibility with resins may significantly be deteriorated, resulting in insufficient reinforcing effect. With a zeta potential over 20 mV, dispersion stability may be impaired.

Next, cellulose nanofibers are discussed.

According to the present embodiment, cellulose nanofibers are fine fibers like microfiber cellulose, and have a peculiar role in improvement of resin strength.

Cellulose nanofibers may be obtained by defibrating (making finer) the carbamated cellulose fibers P3. The raw material pulp P1 may be and is preferably the same as that for microfiber cellulose.

The raw material fibers of cellulose nanofibers may be pretreated or defibrated in the same way as for microfiber cellulose, provided that the degree of defibration is different. The defibration should be performed, for example, so that the average fiber diameter falls below 0.1 μm. In the following, cellulose nanofibers are discussed, focusing on the difference from microfiber cellulose.

The average fiber diameter (average fiber width or average of diameters of single fibers) of cellulose nanofibers is preferably 4 to 100 nm, more preferably 10 to 80 nm. With an average fiber diameter of the cellulose nanofibers below 4 nm, dewaterability may be impaired. Where the cellulose nanofibers are mixed with a dispersant, the dispersant may not sufficiently cover (cling to) the cellulose nanofibers, resulting in insufficient improvement in dispersibility of the cellulose nanofibers. With an average fiber diameter of the cellulose nanofibers over 100 nm, the fibers are no longer cellulose nanofibers.

The average fiber diameter of the cellulose nanofibers may be adjusted by, for example, selection, pretreatment, or defibration of the raw material pulp P1.

Methods of measurements of properties of the cellulose nanofibers may be the same as those for microfiber cellulose, unless otherwise specified herein.

The average fiber length (length of single fibers) of the cellulose nanofibers is preferably 0.1 to 1000 μm, more preferably 0.5 to 500 μm. With an average fiber length below 0.1 μm, the cellulose nanofibers may not be able to form three dimensional networks among them, resulting in insufficient reinforcing effect. With an average fiber length over 1000 μm, the cellulose nanofibers tend to be highly entangled, which may lead to insufficient dispersibility.

The average fiber length of the cellulose nanofibers may be adjusted by, for example, selection, pretreatment, or defibration of the raw material pulp P1.

The degree of crystallinity of the cellulose nanofibers is preferably 95 to 50%, more preferably 90 to 60%. With a degree of crystallinity of the cellulose nanofibers within this range, the strength of resin may reliably be enhanced.

The degree of crystallinity may arbitrarily be adjusted by, for example, selection, pretreatment, or defibration of the raw material pulp P1.

The pulp viscosity of the cellulose nanofibers is preferably 1.0 cps or higher, more preferably 2.0 cps or higher. The pulp viscosity refers to a viscosity of a solution obtained by dissolving cellulose in a cupriethylenediamine solution, and a higher pulp viscosity indicates a higher degree of polymerization of cellulose. With a pulp viscosity of 1.0 cps or higher, the cellulose nanofibers may impart dewaterability to the slurry, and may be kept from decomposition in kneading with resin to provide sufficient reinforcing effect.

The cellulose nanofibers obtained from the defibration may be kept in the form of a dispersion in an aqueous medium, as needed, prior to mixing with other cellulose fibers. The aqueous medium is particularly preferably water in its entirety (aqueous dispersion), but aqueous medium partly containing another liquid compatible with water may also be used. Such another liquid may be, for example, a lower alcohol having 3 or less carbon atoms.

The B-type viscosity of the dispersion of the cellulose nanofibers (1% concentration) is preferably 10 to 2000 cp, more preferably 30 to 1500 cp. With a B-type viscosity of the dispersion within this range, the cellulose nanofibers may easily be mixed with other cellulose fibers, and dewaterability of the cellulose fiber slurry may be improved.

The B-type viscosity of the dispersion (1% solid concentration) is a value as determined in accordance with JIS Z8803 (2011) "Methods for Viscosity Measurement of Liquid". B-type viscosity is resistant torque in stirring a dispersion, and a higher value indicates more energy required for stirring.

The carbamated fine fibers are dispersed in an aqueous medium to prepare a dispersion (slurry), as needed. The aqueous medium is particularly preferably water in its entirety, but aqueous medium partly containing another liquid compatible with water may also be used. Such another liquid may be, for example, a lower alcohol having 3 or less carbon atoms.

The solid concentration of the slurry is preferably 0.1 to 10.0 mass%, more preferably 0.5 to 5.0 mass%. With a solid concentration below 0.1 mass%, an excessive amount of energy may be required for dewatering and drying. With a solid concentration over 10.0 mass%, fluidity of the slurry per se may be too low to homogeneously admix with a dispersant, when used.

<Acid-modified resin>

The carbamated fine fibers thus obtained is preferably mixed with acid-modified resin. Acid-modified resin has acid radicals that are ionically or covalently bonded to part or all of the carbamate groups. This ionic or covalent bonding enhances the reinforcing effect on resins.

The acid-modified resin may be, for example, acid-modified polyolefin resins, acid-modified epoxy resins, or acid-modified styrene elastomer resins. Use of acid-modified polyolefin resins is preferred. Acid-modified polyolefin resin is a copolymer of unsaturated carboxylic acid components and polyolefin components.

As a polyolefin component, one or more polymers of alkenes may be selected and used from the group consisting of, for example, ethylene, propylene, butadiene, and isoprene. Preferably, use of polypropylene resin, which is a polymer of propylene, is preferred.

As an unsaturated carboxylic acid component, one or more members may be selected and used from the group consisting of, for example, maleic anhydrides, phthalic anhydrides, itaconic anhydrides, citraconic anhydrides, and citric anhydrides. Preferably, use of maleic anhydrides is preferred, and thus use of maleic anhydride-modified polypropylene resins is preferred.

The amount of the acid-modified resin to be mixed is preferably 0.1 to 1000 parts by mass, more preferably 1 to 500 parts by mass, particularly preferably 10 to 200 parts by mass, per 100 parts by mass of the microfiber cellulose. In particular, when the acid-modified resin is maleic anhydride-modified polypropylene resin, the amount thereof to be mixed is preferably 1 to 200 parts by mass, more preferably 10 to 100 parts by mass. With an amount of the acid-modified resin to be mixed below 0.1 parts by mass, improvement in strength is not sufficient. An amount to be mixed over 1000 parts by mass is excessive and tends to lower the strength.

The weight average molecular weight of the maleic anhydride-modified polypropylene is, for example, 1000 to 100000, preferably 3000 to 50000.

The acid value of the maleic anhydride-modified polypropylene is preferably 0.5 mgKOH/g or more and 100 mgKOH/g or less, more preferably 1 mgKOH/g or more and 50 mgKOH/g or less.

<Dispersant>

The fibrous cellulose containing the microfiber cellulose or the like is more preferably mixed with a dispersant. A dispersant may preferably be an aromatic compound having an amine group and/or a hydroxyl group, or an aliphatic compound having an amine group and/or a hydroxyl group.

Examples of the aromatic compound having an amine group and/or a hydroxyl group may include anilines, toluidines, trimethylanilines, anisidines, tyramines, histamines, tryptamines, phenols, dibutylhydroxytoluenes, bisphenol A's, cresols, eugenols, gallic acids, guaiacols, picric acids, phenolphthaleins, serotonins, dopamines, adrenalines, noradrenalines, thymols, tyrosines, salicylic acids, methyl salicylates, anisyl alcohols, salicyl alcohols, sinapyl alcohols, difenidols, diphenylmethanols, cinnamyl alcohols, scopolamines, triptophols, vanillyl alcohols, 3-phenyl-1-propanols, phenethyl alcohols, phenoxyethanols, veratryl alcohols, benzyl alcohols, benzoins, mandelic acids, mandelonitriles, benzoic acids, phthalic acids, isophthalic acids, terephthalic acids, mellitic acids, and cinnamic acids.

Examples of the aliphatic compound having an amine group and/or a hydroxyl group may include capryl alcohols, 2-ethylhexanols, pelargonic alcohols, capric alcohols, undecyl alcohols, lauryl alcohols, tridecyl alcohols, myristyl alcohols, pentadecyl alcohols, cetanols, stearyl alcohols, elaidyl alcohols, oleyl alcohols, linoleyl alcohols, methylamines, dimethylamines, trimethylamines, ethylamines, diethylamines, ethylenediamines, triethanolamines, N,N-diisopropylethylamines, tetramethylethylenediamines, hexamethylenediamines, spermidines, spermines, amantadines, formic acids, acetic acids, propionic acids, butyric acids, valeric acids, caproic acids, enanthic acids, caprylic acids, pelargonic acids, capric acids, lauric acids, myristic acids, palmitic acids, margaric acids, stearic acids, oleic acids, linolic acids, linoleic acids, arachidonic acids, eicosapentaenoic acids, docosahexaenoic acids, and sorbic acids.

The dispersant mentioned above blocks hydrogen bonding among the molecules of the microfiber cellulose. Consequently, the microfiber cellulose, in kneading with resin, is reliably dispersed (redispersed) in the resin. Further, the dispersant mentioned above also has a role to improve the compatibility of the microfiber cellulose and the resin. In this regard, the dispersibility of the microfiber cellulose in the resin is improved.

It is conceivable, in kneading the fibrous cellulose and the resin, to add a separate compatibilizer (agent), but mixing the fibrous cellulose and the dispersant (agent) in advance, rather than adding the compatibilizer (agent) at this stage, results in more uniform clinging of the agent over the fibrous cellulose, to thereby enhance the effect to improve compatibility with the resin.

In addition, as the melting point of polypropylene, for example, is 160 °C, the fibrous cellulose and the resin are kneaded at about 180 °C. In this state, the dispersant (liquid), if added, will be dried instantaneously. In this regard, there is known to prepare a masterbatch (composite resin containing a high concentration of microfiber cellulose) using resin with a lower melting point, and then lower the concentration of the microfiber cellulose by adding resin with an ordinary melting point. However, since resins with a lower melting point are generally lower in strength, the strength of the composite resin may be lower according to this method.

The amount of the dispersant to be mixed is preferably 0.1 to 1000 parts by mass, more preferably 1 to 500 parts by mass, particularly preferably 10 to 200 parts by mass, per 100 parts by mass of the microfiber cellulose. With an amount

of the dispersant to be mixed below 0.1 parts by mass, improvement in resin strength may not be sufficient. An amount of the dispersant to be mixed over 1000 parts by mass is excessive and tends to lower the resin strength.

It is assumed that the acid-modified resin discussed above is intended to improve the reinforcing effect through improvement of compatibility by its acid radicals ionically or covalently bonded with the carbamate groups of the microfiber cellulose, and has a large molecular weight and thus blends well with the resin, contributing to the improvement in strength. On the other hand, the dispersant mentioned above is intended to improve dispersibility of the microfiber cellulose in the resin through blocking of the aggregation by being interposed between the hydroxyl groups of the microfiber cellulose, and has a lower molecular weight than that of the acid-modified resin, and thus is capable of entering the narrow space among the molecules of the microfiber cellulose, where the acid-modified resin cannot enter, to play a part in enhancing the dispersibility of the microfiber cellulose and thus the strength. In view of the above, it is preferred that the molecular weight of the acid-modified resin is 2 to 2000 times, preferably 5 to 1000 times the molecular weight of the dispersant.

This point is discussed in more detail. Resin powder to be discussed later is physically interposed among the molecules of the microfiber cellulose to block the hydrogen bonding, thereby improving the dispersibility of the microfiber cellulose. On the other hand, the acid-modified resin improves the compatibility by ionically or covalently bonding its acid radicals with the carbamate groups of the microfiber cellulose, to thereby enhance the reinforcing effect. Here, the dispersant has the same function to block the hydrogen bonding among the molecules of the microfiber cellulose, while the resin powder, which is on the micrometer order, is physically interposed to interfere with the hydrogen bonding. Accordingly, though the dispersibility is lower than that of the dispersant, the resin powder per se is molten to join in a matrix resin, and thus does not contribute to deterioration of the physical properties. In contrast, the dispersant, which is particles having the molecular level size and extremely small, covers the microfiber cellulose to block the hydrogen bonding, which results in higher efficacy in improving dispersibility of the microfiber cellulose. However, the dispersant may remain in the resin and contribute to deterioration of the physical properties.

The mixture of the fibrous cellulose and the acid-modified resin as well as the dispersant and the like may be dried and ground into a powdered product prior to kneading with the matrix resin. In this form, no drying of the fibrous cellulose is needed for kneading with the matrix resin, which is thermally efficient. Further, when the dispersant is already mixed in the mixture, the fine fibers including the microfiber cellulose and the like are less likely to be unredispersible even after the mixture is dried.

The mixture is dehydrated into a dehydrated product, as needed, prior to the drying. For the dehydration, one or more dehydrators may be selected and used from the group consisting of, for example, belt presses, screw presses, filter presses, twin rolls, twin wire formers, valveless filters, center disk filters, film treatment units, and centrifuges.

For drying the mixture, one or more means may be selected and used from the group consisting of, for example, rotary kiln drying, disk drying, air flow drying, medium fluidized drying, spray drying, drum drying, screw conveyor drying, paddle drying, single-screw kneading drying, multi-screw kneading drying, vacuum drying, and stirring drying.

The dried mixture (dried product) is pulverized into a powdered product. For pulverizing the dried product, one or more means may be selected and used from the group consisting of, for example, bead mills, kneaders, dispersers, twist mills, cut mills, and hammer mills.

The average particle size of the powdered product is preferably 1 to 10000 μm, more preferably 10 to 5000 μm, particularly preferably 100 to 1000 μm. With an average particle size of the powdered product over 10000 μm, the powdered product may have inferior kneadability with the resin. On the other hand, making the average particle size of the powdered product smaller than 1 μm requires a high amount of energy, which is not economical.

The average particle size of the powdered product may be controlled by regulating the degree of pulverization, or by classification in classification apparatus, such as filters or cyclones.

The bulk specific gravity of the mixture (powdered product) is preferably 0.03 to 1.0, more preferably 0.04 to 0.9, particularly preferably 0.05 to 0.8. A bulk specific gravity exceeding 1.0 means the hydrogen bonding among the molecules of the fibrous cellulose being still firmer, so that dispersion in the resin is not easy. A bulk specific gravity less than 0.03 is disadvantageous in view of transportation cost.

The bulk specific gravity is a value determined in accordance with JIS K7365.

The moisture percentage of the mixture (powdered product) is preferably 50 % or lower, more preferably 30 % or lower, particularly preferably 10 % or lower. With a moisture percentage over 50 %, a significant amount of energy is required for kneading with the resin, which is not economical.

The moisture percentage is a value determined by holding a sample at 105 °C for 6 hours or longer in a constant temperature dryer until fluctuation in mass is not observed and measuring the mass as a mass after drying, and calculated by the following formula:

Moisture percentage of fibers (%) = [(mass before drying - mass after drying)/mass before drying] × 100

The microfiber cellulose thus dehydrated and dried may contain resin. The resin, when contained, blocks the

hydrogen bonding among the molecules of the dehydrated, dried microfiber cellulose to improve the dispersibility of the microfiber cellulose in matrix resin during the kneading.

The resin to be contained in the dehydrated, dried microfiber cellulose may be in the form of, for example, powder, pellets, or sheets, with the powder (powdered resin, corresponding to the resin powder mentioned above) being preferred.

When in the form of powder, the resin powder contained in the dehydrated, dried microfiber cellulose may have an average particle size of preferably 1 to 10000 μm, more preferably 10 to 5000 μm, particularly preferably 100 to 1000 μm. With an average particle size over 10000 μm, the particle size may be too large for the powder to enter the kneading apparatus. With an average particle size below 1 μm, the powder may be too fine to block the hydrogen bonding among the molecules of the microfiber cellulose. Incidentally, the resin to be used here, such as the powdered resin, may be of the same kind as or different from the matrix resin to be kneaded with the microfiber cellulose (the resin as a main raw material), but the same kind is preferred.

The resin powder with an average particle size of 1 to 10000 μm is preferably mixed in an aqueous dispersion state prior to the dehydration and drying. By mixing in an aqueous dispersion state, the resin powder may be dispersed homogeneously among the molecules of the microfiber cellulose, resulting in homogeneous dispersion of the microfiber cellulose in the composite resin obtained from the kneading, to thereby further improve the strength properties.

The powdered product thus obtained (reinforcing material for resins) is kneaded with matrix resin, to thereby obtain fibrous cellulose composite resin. The kneading may be performed by, for example, mixing the resin in the form of pellets with the powdered product, or by first melting the resin to obtain a molten product and then mixing the powdered product into the molten product. The acid-modified resin, the dispersant, and the like may be added at this stage.

For the kneading treatment, one or more members may be selected and used from the group consisting of, for example, single-screw or multi-screw (with two or more screws) kneaders, mixing rolls, kneaders, roll mills, Banbury mixers, screw presses, and dispersers. Among these, multi-screw kneaders with two or more screws are preferably used. Two or more multi-screw kneaders with two or more screws, arranged in parallel or in series, may also be used.

The peripheral speed of the screws of the multi-screw kneaders with two or more screws may be preferably 0.2 to 200 m/min, more preferably 0.5 to 150 m/min, particularly preferably 1 to 100 m/min. At a peripheral speed below 0.2 m/min, the microfiber cellulose may not be successfully dispersed in the resin. At a peripheral speed over 200 m/min, the shearing force applied to the microfiber cellulose may be excessive, so that the reinforcing effect may not be obtained.

In the kneader used in the present embodiment, the ratio of the screw diameter to the length of the kneading section is preferably 15 to 60. At a ratio below 15, the kneading section is so short that the microfiber cellulose and the resin may not be mixed. At a ratio over 60, the kneading section is so long that the shear load on the microfiber cellulose may be too high to provide the reinforcing effect.

The temperature for the kneading treatment is the glass transition temperature of the resin or higher and may depend on the type of the resin, and is preferably 80 to 280 °C, more preferably 90 to 260 °C, particularly preferably 100 to 240 °C.

The resin may be at least either one of thermoplastic resin or thermosetting resin.

As thermoplastic resin, one or more resins may be selected and used from the group consisting of, for example, polyolefins, such as polypropylene (PP) and polyethylene (PE), polyester resins, such as aliphatic polyester resins and aromatic polyester resins, polystyrenes, polyacrylic resins, such as methacrylates and acrylates, polyamide resins, polycarbonate resins, and polyacetal resins.

It is preferred, however, to use at least either one of polyolefins or polyester resins. Polyolefins may preferably be polypropylenes. Polyester resins may be aliphatic polyester resins, such as polylactic acid or polycaprolactone, or aromatic polyester resins, such as polyethylene terephthalate, and biodegradable polyester resins (also referred to simply as "biodegradable resins") may preferably be used.

As the biodegradable resin, one or more members may be selected and used from the group consisting of, for example, hydroxycarboxylic acid-based aliphatic polyesters, caprolactone-based aliphatic polyesters, and dibasic acid polyesters.

As the hydroxycarboxylic acid-based aliphatic polyester, one or more members may be selected and used from the group consisting of, for example, homopolymers of a hydroxycarboxylic acid, such as lactic acid, malic acid, glucose acid, or 3-hydroxybutyric acid, and copolymers using at least one of these hydroxycarboxylic acids. It is preferred to use polylactic acid, a copolymer of lactic acid and any of the hydroxycarboxylic acids other than lactic acid, polycaprolactone, or a copolymer of caprolactone and at least one of the hydroxycarboxylic acids, and particularly preferred to use polylactic acid.

The lactic acid may be, for example, L-lactic acid or D-lactic acid, and a single kind or a combination of two or more kinds of these lactic acids may be used.

As the caprolactone-based aliphatic polyester, one or more members may be selected and used from the group consisting of, for example, homopolymers of polycaprolactone, and copolymers of polycaprolactone or the like and any of the hydroxycarboxylic acids mentioned above.

As the dibasic acid polyester, one or more members may be selected and used from the group consisting of, for

example, polybutylene succinates, polyethylene succinates, and polybutylene adipates.

A single kind alone or a combination of two or more kinds of the biodegradable resins may be used.

Examples of the thermosetting resins may include, for example, phenol resins, urea resins, melamine resins, furan resins, unsaturated polyesters, diallyl phthalate resins, vinyl ester resins, epoxy resins, polyurethane-based resins, silicone resins, and thermosetting polyimide-based resins. A single kind or a combination of two or more kinds of these resins may be used.

The resin may contain an inorganic filler, preferably at a rate that does not disadvantageously affect thermal recycling.

Examples of the inorganic filler may include, for example, simple substances of metal elements belonging to Groups I to VIII of the Periodic Table, such as Fe, Na, K, Cu, Mg, Ca, Zn, Ba, Al, Ti, or a silicon element; oxides thereof, hydroxides thereof, carbonates thereof, sulfates thereof, silicates thereof, or sulfites thereof; and various clay minerals formed of these compounds.

Specific examples of the inorganic filler may include, for example, barium sulfate, calcium sulfate, magnesium sulfate, sodium sulfate, calcium sulfite, zinc oxide, silica, heavy calcium carbonate, light calcium carbonate, aluminum borate, alumina, iron oxide, calcium titanate, aluminum hydroxide, magnesium hydroxide, calcium hydroxide, sodium hydroxide, magnesium carbonate, calcium silicate, clay wollastonite, glass beads, glass powder, silica sand, silica stone, quartz powder, diatomaceous earth, white carbon, and glass fibers. A plurality of these inorganic fillers may be contained. An inorganic filler contained in de-inked pulp may also be used.

The mixing ratio of the fibrous cellulose and the resin is preferably 1 part by mass or more of the fibrous cellulose to 99 parts by mass or less of the resin, more preferably 2 parts by mass or more of the fibrous cellulose to 98 parts by mass or less of the resin, particularly preferably 3 parts by mass or more of the fibrous cellulose to 97 parts by mass or less of the resin. Further, the ratio is preferably 50 parts by mass or less of the fibrous cellulose to 50 parts by mass or more of the resin, more preferably 40 parts by mass or less of the fibrous cellulose to 60 parts by mass or more of the resin, particularly preferably 30 parts by mass or less of the fibrous cellulose to 70 parts by mass or more of the resin. Particularly, with 10 to 50 parts by mass of the fibrous cellulose, the strength, in particular the bending strength and the tensile elastic modulus, of the resin composition may significantly be improved.

It is noted that the ratio of the fibrous cellulose and the resin contained in the eventually obtained resin composition is usually the same as the mixing ratio of the fibrous cellulose and the resin mentioned above.

The difference in solubility parameter $(cal/cm^3)^{1/2}$ (SP value) between the microfiber cellulose and the resin, that is, supposing that the SP value of the microfiber cellulose is $SP_{MFC}$ value and the SP value of the resin is $SP_{POL}$ value, the difference in SP value may be obtained by the formula: Difference in SP value = $SP_{MFC}$ value - $SP_{POL}$ value. The difference in SP value is preferably 10 to 0.1, more preferably 8 to 0.5, particularly preferably 5 to 1. With a difference in SP value over 10, the microfiber cellulose is not dispersed in the resin, and thus the reinforcing effect may not be obtained. With a difference in SP value below 0.1, the microfiber cellulose is dissolved in the resin and does not function as a filler, so that the reinforcing effect cannot be obtained. In this regard, a smaller difference between the $SP_{POL}$ value of the resin (solvent) and the $SP_{MFC}$ value of the microfiber cellulose (solute) indicates higher reinforcing effect. It is noted that the solubility parameter $(cal/cm^3)^{1/2}$ (SP value) is a scale of solvent/solute intermolecular force, and a solvent and a solute having closer SP values results in higher solubility.

(Other Components)

In addition to the fine fibers, pulp, and the like discussed above, the resin composition may contain or may be caused to contain fibers derived from plant materials obtained from various plants, such as kenaf, jute hemp, manila hemp, sisal hemp, ganpi, mitsumata, mulberry, banana, pineapple, coconut, corn, sugar cane, bagasse, palm, papyrus, reed, esparto, survival grass, wheat, rice, bamboo, various kinds of softwood (cedar, cypress, and the like), hardwood, and cotton.

In the resin composition, one or more members selected from the group consisting of, for example, antistatic agents, flame retardants, antibacterial agents, colorants, radical scavengers, and foaming agents may be added without disturbing the effects of the present invention. These materials may be added to the dispersion of the fibrous cellulose, added while the fibrous cellulose and the resin are kneaded, added to the resulting kneaded product, or added otherwise. In view of the manufacturing efficiency, these materials may preferably be added while the fibrous cellulose and the resin are kneaded.

The resin composition may contain, as a rubber component, ethylene/$\alpha$-olefin copolymer elastomers or styrene-butadiene block copolymers. Examples of $\alpha$-olefins may include butene, isobutene, pentene, hexene, methylpentene, octene, decene, and dodecane.

<Molding Treatment>

A product obtained from kneading of the fibrous cellulose and the resin may be molded into a desired shape, following another kneading, if necessary. The size, thickness, shape, and the like of the product resulting from the molding are not particularly limited, and the molded product may be in the form of, for example, sheets, pellets, powders, or fibers.

The temperature during the molding treatment is at or higher than the glass transition point of the resin, and may be, for example, 90 to 260 °C, preferably 100 to 240 °C, depending on the kind of the resin.

The kneaded product may be molded by, for example, die molding, injection molding, extrusion molding, hollow molding, or foam molding. The kneaded product may be spun into a fibrous shape, mixed with the above-mentioned plant materials or the like, and molded into a mat shape or a board shape. The mixing may be performed by, for example, simultaneous deposition by air-laying.

As a machine for molding the kneaded product, one or more machines may be selected and used from the group consisting of, for example, injection molding machine, a blow molding machine, a hollow molding machine, a blow molding machine, a compression molding machine, an extrusion molding machine, a vacuum molding machine, and a pressure molding machine.

The molding discussed above may be performed following the kneading, or by first cooling the kneaded product, chipping the cooled product in a crusher or the like, and then introducing the resulting chips in a molding machine, such as an extrusion molding machine or an injection molding machine. It is noted that the molding is not an essential requirement of the present invention.

<Others>

One of the features of the present invention is to achieve higher Fines A of cellulose fibers while their percentage of fibrillation is kept lower. Specific means for achieving this feature are not particularly limited, and may be by controlling the conditions of the defibration, the kind of raw material pulp, and or the like. It is preferred that the properties of the cellulose fibers prior to the defibration fulfill the conditions discussed above (e.g., Fines A or the like), and more preferred that the cellulose fibers to be defibrated are manufactured by the method as discussed above. According to this method, the conditions for the Fines A and the percentage of fibrillation are fulfilled with the ordinary defibration being hardly changed.

Further, the content of the carbamated microfiber cellulose in the composite resin according to the present embodiment is preferably 0.1 to 99 mass%, more preferably 0.5 to 95 mass%, particularly preferably 1 to 90 mass%. At a content of the carbamated microfiber cellulose below 0.1 mass%, sufficient reinforcing effect on composite resins may not be achieved. At a content of the carbamated microfiber cellulose over 90 mass%, the resin component is insufficient, which causes difficulties in processing.

EXAMPLES

Next, Examples of the present invention will now be discussed.

A pulp sheet was prepared with a sizing agent being added to a pup slurry containing a plurality of kinds of raw material pulp at a particular mixing ratio so that a predetermined Cobb sizing degree and the basis weight were achieved. Next, in a coating facility, the pulp sheet thus obtained was coated with an aqueous solution of urea at a solid concentration of 40% so that the pulp and the urea were present at a particular ratio of pulp to urea by mass in terms of solid content, and dried in an after-dryer section, to thereby obtain a urea-coated sheet. The urea-coated sheet thus obtained was subjected to reaction in a roll-to-roll reactor at a predetermined temperature for a predetermined duration, to thereby obtain a sheet made of carbamate-modified cellulose. Then water was added to the carbamate-modified cellulose sheet so that a solid concentration was 5% and the carbamate-modified cellulose sheet was disintegrated in a disintegrating machine . The resulting disintegrated carbamate-modified cellulose was diluted with distilled water and stirred, and subjected to a plurality of cycles of dehydration and washing to adjust the solid concentration to 3.5 mass%, to thereby obtain washed, carbamate-modified cellulose. The carbamate-modified cellulose thus washed was subjected to beating in a beater until Fines A (proportion of fibers having a length of 0.2 mm or shorter according to the fiber length distribution measurement using FS5) of the cellulose was 25% or higher, to obtain carbamate-modified microfiber cellulose. To the carbamate-modified microfiber cellulose thus obtained, maleic anhydride-modified polypropylene was added so that the ratio of the carbamate-modified microfiber cellulose to the maleic anhydride-modified polypropylene was 67:33, and the resulting mixture was heated using a contact dryer heated to 140 °C, to obtain a carbamate-modified microfiber cellulose-containing material. To this carbamate-modified microfiber cellulose-containing material, polypropylene pellets were admixed so that the ratio of the carbamate-modified microfibers to the other components by mass was 10:90, and the resulting mixture was kneaded at 180 °C at 200 rpm using a twin-screw kneader, to obtain carbamate-modified microfiber cellulose composite resin with a 10% fiber content. This carbamate-modified microfiber cellulose composite resin with a 10% fiber content was

cut in a pelleter into columnar pieces of 2 mm in diameter and 2 mm in length, and injection molded at 180 °C into a cuboid test piece (59 mm long, 9.6 mm wide, and 3.8 mm thick).

The test piece thus obtained was subjected to determination of flexural modulus, bending strength, and area ratio of contraries. The results are shown in Table 1. Each test was conducted in the following manner. In the Table, the term "prior to defibration" refers to the stage immediately before the beating mentioned above (immediately before being made into the microfiber cellulose).

<Area Ratio of Contraries>

Measurement of contraries was made according to JIS P 8145: 2011, and an area ratio below 10 $mm^2/m^2$ was indicated by o (circle), while an area ratio of 10 $mm^2/m^2$ or higher was indicated by × (cross mark).

<Flexural Modulus>

Given that the flexural modulus of the base PP (1.48 GPa) was 1.00, a flexural modulus of 1.50 times or more was indicated by o (circle), while a flexural modulus below 1.50 times was indicated by × (cross mark).

<Bending Strength>

Given that the bending strength of the base PP (53.4 MPa) was 1.00, a bending strength of 1.25 times or more was indicated by o (circle), while a bending strength below 1.25 times was indicated by × (cross mark).

Table 1

| | | Test Example 1 | Test Example 2 | Test Example 3 | Test Example 4 | Test Example 5 | Test Example 6 | Test Example 7 | Test Example 8 |
|---|---|---|---|---|---|---|---|---|---|
| Freeness prior to Defibration | (ml) | 612 | 612 | 612 | 662 | 662 | 758 | 612 | 612 |
| Average Fiber Length | (mm) | 0.82 | 0.56 | 0.45 | 0.44 | 0.34 | 0.62 | 0.29 | 0.20 |
| Fines A | (%) | 27.72 | 36.18 | 44.27 | 51.28 | 64.29 | 44.14 | 64.63 | 87.09 |
| Percentage of Fibrillation | (%) | 0.75 | 0.84 | 0.89 | 0.92 | 0.97 | 2.08 | 1.03 | 1.45 |
| Flexural Modulus | - | ○ | ○ | ○ | ○ | ○ | ○ | × | × |
| Bending Strength | - | ○ | ○ | ○ | ○ | ○ | ○ | × | × |
| Area Ratio of Contraries | - | ○ | ○ | ○ | ○ | ○ | × | × | × |

INDUSTRIAL APPLICABILITY

The present invention is applicable as fibrous cellulose composite resin and a method for preparing the same.

DESCRIPTION OF REFERENCE NUMERALS

- 100: papermaking step
- 110: wire section
- 120: press section

130: pre-dryer section
200: coating step
210: coater section
220: after-dryer section

P1: raw material pulp
P2: cellulose fiber-containing material
P3: carbamated cellulose fibers
P4: carbamated fine fibers
X1: papermaking/coating step
X2: carbamation step
X3: defibration step

## Claims

**1.** Fibrous cellulose composite resin comprising:

fibrous cellulose and resin,
wherein the fibrous cellulose is carbamated microfiber cellulose having hydroxy groups partially or fully substituted with carbamate groups, and having Fines A of 25% or higher and a percentage of fibrillation of 1.0% or lower.

**2.** The fibrous cellulose composite resin according to claim 1,
wherein raw material fibers of the fibrous cellulose have Fines A of 20% or higher, and a freeness of 300 to 700 ml.

**3.** The fibrous cellulose composite resin according to claim 1,
wherein a content of the carbamated microfiber cellulose is 1 to 90 mass%.

**4.** A fibrous cellulose-containing material, comprising:

carbamated microfiber cellulose having hydroxy groups partially or fully substituted with carbamate groups, and having Fines A of 25% or higher and a percentage of fibrillation of 1.0% or lower, and
maleic anhydride-modified resin.

**5.** A method for producing fibrous cellulose composite resin, comprising:

subjecting raw material pulp to papermaking to obtain a strip-shaped pulp sheet,
coating the pulp sheet with at least either of urea and a derivative thereof, followed by heating, to prepare a carbamated pulp sheet,
defibrating the carbamated pulp sheet into carbamated microfiber cellulose having Fines A of 25% or higher and a percentage of fibrillation of 1.0% or lower, and
kneading the carbamated microfiber cellulose and resin to obtain a fibrous cellulose composite resin.

[FIG.1]

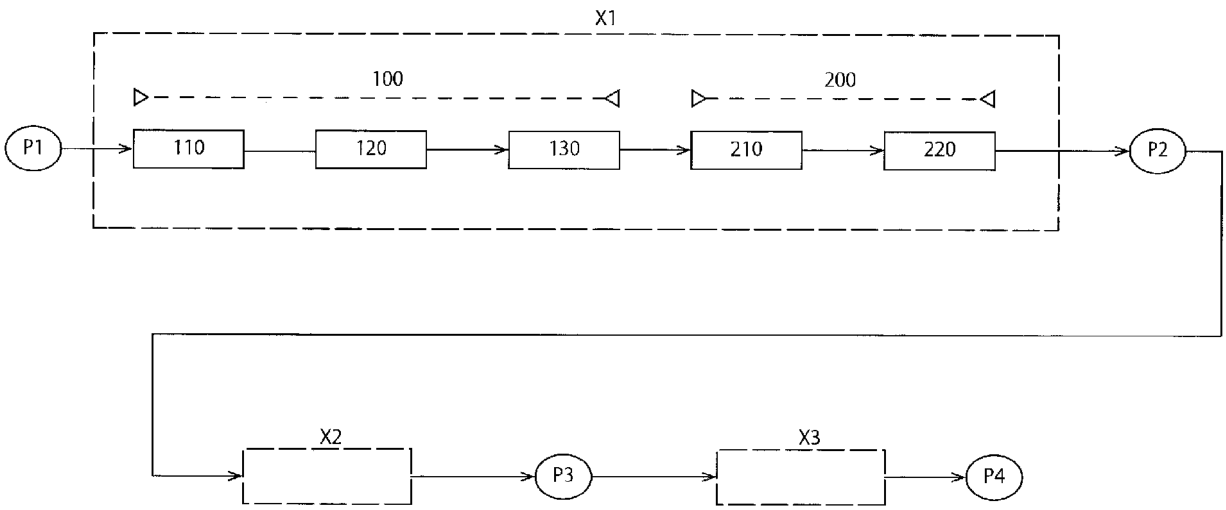

**INTERNATIONAL SEARCH REPORT**

International application No.
**PCT/JP2023/020998**

**A. CLASSIFICATION OF SUBJECT MATTER**

***C08L 101/08***(2006.01)i; ***C08B 15/06***(2006.01)i; ***C08L 1/08***(2006.01)i; ***D06M 13/432***(2006.01)i; *D06M 101/06*(2006.01)n
FI: C08L101/08; C08B15/06; C08L1/08; D06M13/432; D06M101:06

According to International Patent Classification (IPC) or to both national classification and IPC

**B. FIELDS SEARCHED**

Minimum documentation searched (classification system followed by classification symbols)

C08L101/08; C08B15/06; C08L1/08; D06M13/432; D06M101/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/193119 A1 (DAIO PAPER CORP.) 30 September 2021 (2021-09-30) claims, examples | 1-5 |
| A | JP 2020-163651 A (DAIO PAPER CORP.) 08 October 2020 (2020-10-08) claims, test examples 1-8 | 1-5 |
| A | WO 2022/091580 A1 (DAIO PAPER CORP.) 05 May 2022 (2022-05-05) claims, examples | 1-5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/020998**

| Patent document cited in search report | Publication date (day/month/year) | Patent family member(s) | Publication date (day/month/year) |
|---|---|---|---|
| WO 2021/193119 A1 | 30 September 2021 | EP 4130049 A1<br>claims, examples<br>CN 115066442 A<br>KR 10-2022-0158223 A | |
| JP 2020-163651 A | 08 October 2020 | US 2022/0135781 A1<br>claims, test examples 1-8<br>EP 3922428 A1<br>CN 113474140 A<br>KR 10-2021-0148087 A | |
| WO 2022/091580 A1 | 05 May 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019001876 A